(19) Europäisches Patentamt
European Patent Office
Office européen des brevets

(11) Publication number: **0 350 280 B1**

(12) **EUROPEAN PATENT SPECIFICATION**

(45) Date of publication of patent specification: **22.09.93**

(51) Int. Cl.⁵: **C10G 11/05**, B01J 29/08

(21) Application number: **89306806.4**

(22) Date of filing: **04.07.89**

(54) Metal resistant FCC catalyst and FCC process using same.

(30) Priority: **07.07.88 US 216109**

(43) Date of publication of application:
**10.01.90 Bulletin 90/02**

(45) Publication of the grant of the patent:
**22.09.93 Bulletin 93/38**

(84) Designated Contracting States:
**BE DE ES FR GB IT NL**

(56) References cited:
EP-A- 0 139 291
EP-A- 0 204 236
GB-A- 2 116 062
US-A- 4 515 683
US-A- 4 642 177

(73) Proprietor: **UOP**
**25 East Algonquin Road**
**Des Plaines, Illinois 60017-5017(US)**

(72) Inventor: **Upson, Lawrence Lewis**
**P.O. Box**
**NL-2051 EJ Overveen(NL)**
Inventor: **Van de Gender, Pieter Johannes**
**P.O. Box**
**NL-2312 VK Leiden(NL)**
Inventor: **Van Dijk, Wim**
**P.O.box**
**NL-9914 TG Zeerijp(NL)**

(74) Representative: **Brock, Peter William et al**
**UROUHART-DYKES & LORD 91 Wimpole**
**Street**
**London W1M 8AH (GB)**

## Description

The invention relates to a metal resistant fluid catalytic cracking (FCC) catalyst comprising in admixture a molecular sieve component (LZ-210), a large pore alumina component, and a rare earth component (bastanite). Such catalysts exhibited improved peformance in the presence of deleterious levels of vanadium and/or nickel. This invention also relates to FCC processes utilizing such catalysts to crack charge stocks containing deleterious levels of vanadium and/or nickel.

FCC feed stocks can contain large quantities of metal contaminants including vanadium and nickel-containing contaminants, which are the most deleterious. Vanadium pentoxide is formed in the regenerator and causes irreversible destruction of the zeolite crystalline structure, resulting in a loss of surface area and catalytic activity. Selectivity for gasoline will also be altered significantly as a result of the presence of vanadium with the production of more undesired quantities of hydrogen and coke. Nickel does not cause the destruction of crystalline zeolite materials but does also produce large quantities of undesired hydrogen and coke.

The catalytic deactivating effects of vanadium can be substantially prevented by incorporating a vanadium trapping agent. Alumina has been proposed as such a trapping agent (GB-A-2116062) as have rare earth compounds (US-A-4515683). . It is well known, however, that alumina addition results in a distinct deterioration in FCC catalyst gasoline selectivity, causing an increase in the undesirable yields of coke and light gases (YOUNG G.W., CREIGHTON J., WEAR C.C., and RITTER R.E. Paper AM-87-51 presented at the 1987 NPRA Annual Meeting March 1987, San Antonio, Texas).

Large pore (>90 Å (>9 nm) avg. diameter) matrices have been claimed to be more suitable than small pore matrices, in that the large pore matrices reduce the coke and light gas formation caused by the contaminant metals (US-A-3944482). . Moreover, it has been maintained that the best performance is obtained with a matrix that contains a high level of this large pore component, specifically greater than 25 wt% of the matrix and preferably more than 50 wt% of the matrix.

We have found that FCC catalysts formed from matrices which contain low surface area, large pore alumina have an optimal metals tolerance (especially for vanadium and/or nickel) at an alumina level considerably below the 50 wt.% of matrix level preferred in the US-A-3944482 Patent.

The present invention provides a vanadium and nickel resistant fluid catalytic cracking catalyst comprising a combination of 10 to 50 weight % of an LZ-210 type molecular sieve component, 0.5 to 25 weight % of a rare earth component of the bastnasite type separate from the molecular sieve component and 0.5 to 25 weight % of a large pore, low surface area alumina in a matrix, the amount of alumina in the matrix being such as to result in the matrix having a pore diameter greater than 90 Angstroms (9nm) and a surface area of 25 to 60 $m^2/g$.

The catalysts of the present invention find particular utility in the cracking of heavy feeds and/or residual oils where high levels of metals contaminants, particularly of vanadium and nickel, may be present.

The present invention also provides a metal tolerant FCC process comprising contacting a chargestock containing normally deleterious amounts of nickel and/or vanadium with a catalyst as defined above.

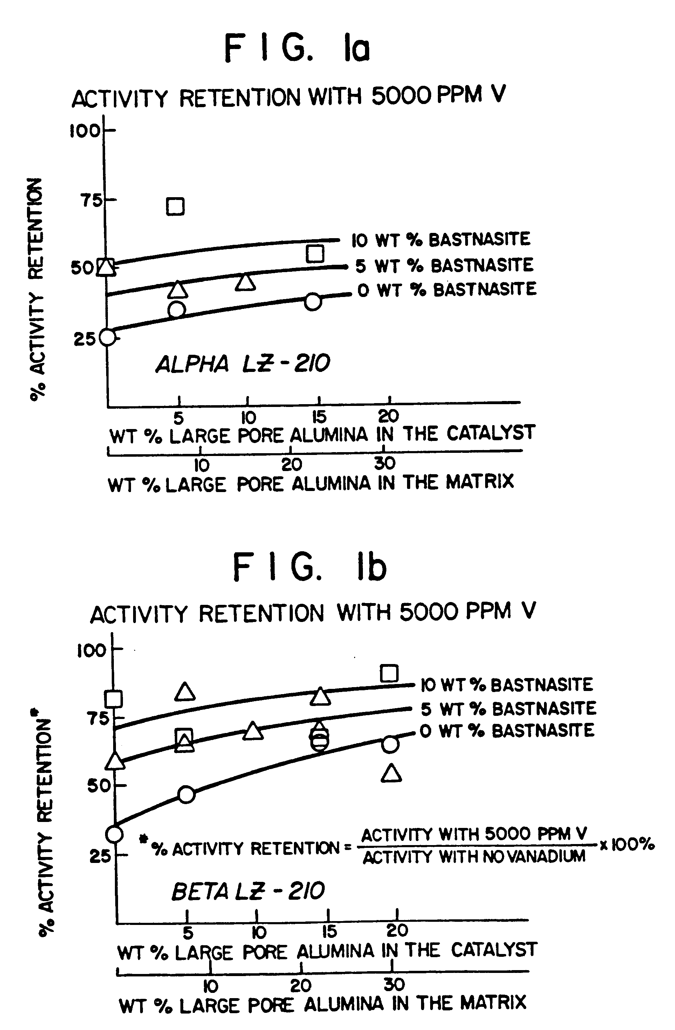

Figures 1 to 4 present the results of comparison of the present invention with prior catalyst systems for various levels of bastnasite in terms of plots of activity retention, coke selectivity and light gas make as a function of wt.% large pore alumina content of the matrix or catalyst for charge stocks containing specified levels of vanadium and nickel.

In this invention, a large pore, low surface area alumina is used which, when added to the total catalyst matrix, results in an average pore diameter of the matrix greater than 90Å (9 nm).

In the large pore alumina-containing catalysts of this present invention, the matrix surface area is in the range of 25-60 $m^2/g$ compared to 150-250 $m^2/g$ surface area for the matrices described in US-A-3944482

An illustration of the FCC performance of a catalyst having a matrix containing varying amounts of a large pore, low surface area alumina is shown in Figures 1-4 as a function of bastnasite content. The alumina was incorporated into two different types of catalysts, each having an LZ-210 type molecular sieve with differing silica to alumina ratios. These catalysts were impregnated with vanadium and/or nickel to simulate the effects of exposure to metal contaminated feeds.

These figures also illustrate the effects of increasing the level of large pore alumina in a catalyst formulation. First, Figure 1 shows the positive effect of the large pore alumina (with 0% bastnasite) on the stability (as measured relative to the performance of uncontaminated catalyst) of the catalysts after vanadium impregnation. Secondly, Figure 2 shows the reduction in coke and light gas that added large pore alumina can achieve when nickel is present. In addition, a high degree of matrix alumina is desirable since it directly improves the bottoms cracking characteristics of the FCC catalyst (Young, G.W. et al, cited earlier). Figures 3 and 4 show that for catalysts without bastnasite coke and particularly light gas yields are severely increased (an unwanted result) when the amount of large pore alumina is increased in the presence of vanadium.

Thus, on the one hand, the presence of large pore alumina in these catalyst systems has very beneficial effects (improved catalyst stability in the presence of vanadium, improved selectivity in the presence of nickel, improved bottoms cracking), while on the other hand, it has substantial negative effects (poorer catalytic efficiency in the presence of vanadium).

As mentioned earlier, rare earth compounds have also been known to act as metals traps. However, it is most desirable to have the rare earth compound in the matrix as a component which is separate from and distinct from the molecular sieve component of the FCC catalyst rather than ion exchanged into the molecular sieve component of the catalyst.

US Patent 4,515,683 teaches that rare earth impregnation on the catalyst works better as a metals trap than does ion exchanged rare earth. In addition a high degree of rare earth prevents the FCC catalyst from acting as an octane catalyst. (Upson L.L. - "What to look for in Octane Catalyst" -Paper given at Katalistiks Octane Symposium, Amsterdam, January 1986).

In order to achieve a high rare earth level for metals trap purposes without a high degree of rare earth exchange, the present invention incorporates bastnasite into the catalyst matrix. Bastnasite is a mixed rare earth flurocarbonate, either calcined or uncalcined, which remains stable and does not dissolve during the catalyst preparation procedure. Thus, the rare earth in bastnasite does not ion exchange with the molecular sieve cation.

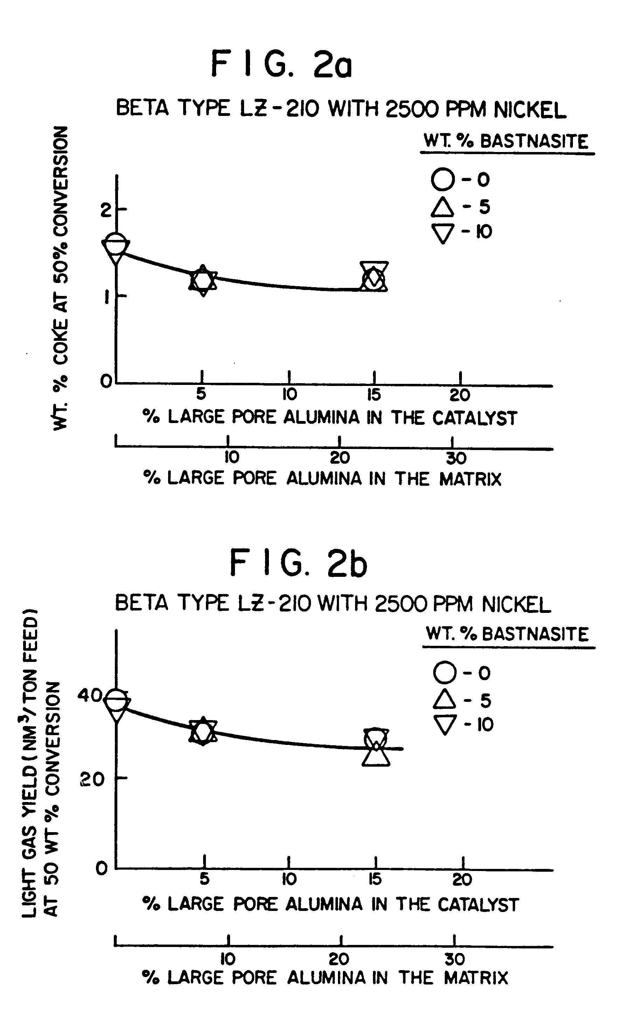

It has now been found that the use of bastnasite in an FCC catalyst matrix significantly improves coke and light gas selectivity, and catalyst stability in the presence of high levels of vanadium, as is also seen in Figures 1, 3 and 4 for the 0% alumina case. Figure 2 indicates that bastnasite does not effect the nickel tolerance of FCC catalysts.

In order to study the benefits of using a combination of large pore alumina and bastnasite, two different catalyst base formulations, containing ALPHA LZ-210 and BETA LZ-210 sieves, were prepared with varying amounts of bastnasite and large pore alumina. Alpha LZ-210 sieves are LZ-210 stabilized molecular sieves prepared from Na-Y, according to the procedures in US-A-4610856, and having a unit cell size in the range 24.58-24.62 Å (2.458-2.462 nm). Beta LZ-210 sieves are stabilized molecular sieves prepared from Na-Y also using the procedures in US-A-4610856 with a unit cell size in the range 24.48-24.54 Å (2.448-2.454 nm).

The results of evaluations of the various catalysts prepared were in excellent agreement for the two types of catalyst formulations and are reflected in the data presented in Figures 1-4.

From these data it can be concluded that for catalysts without bastnasite, a small amount of large pore alumina improves the selectivity after vanadium impregnation. High contents of alumina, however, cause a significant increase in coke and light gas yields.

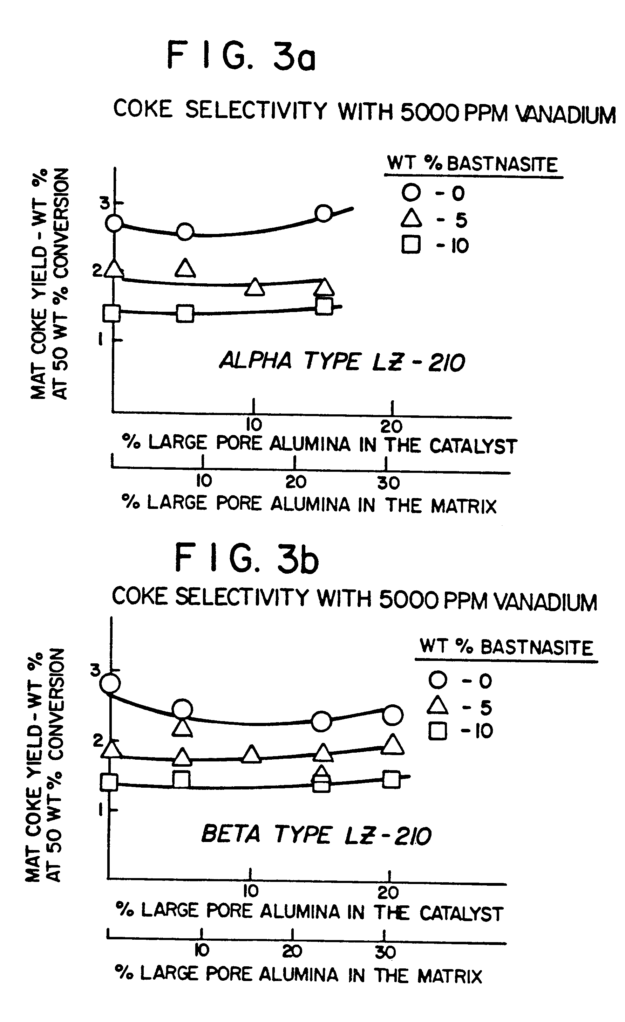

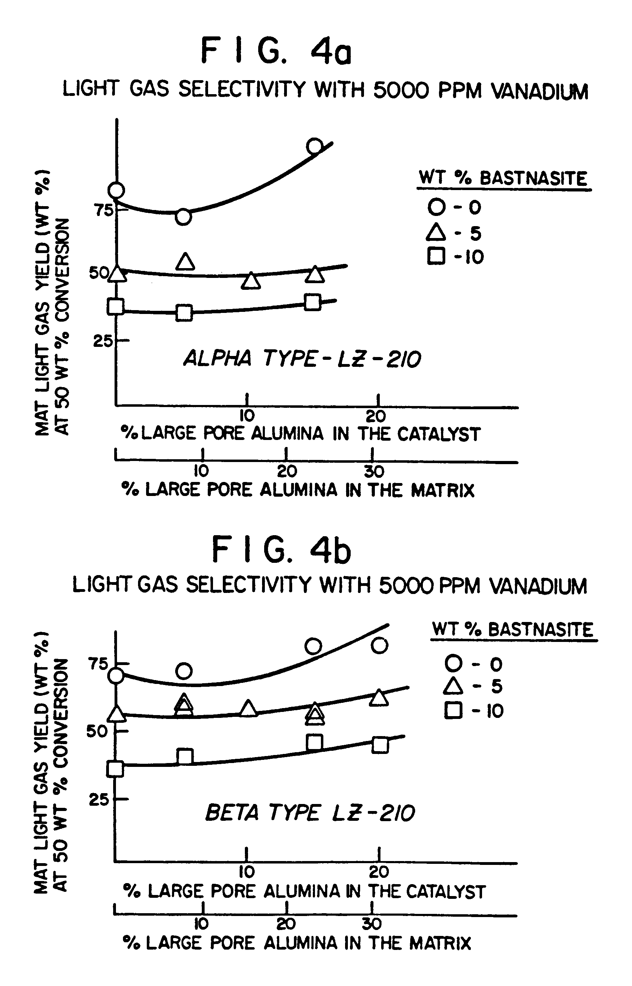

It has now been found that bastnasite added to catalysts containing matrices with large pore alumina overcomes the adverse effects of the alumina towards coke and light gas. Figures 3 and 4 show very clearly that the presence of bastnasite in large pore alumina containing catalysts results in a substantial improvement in coke and light gas selectivities in the presence of vanadium. The combination of large pore alumina and bastnasite in the catalyst matrix also provides activity retention in the presence of vanadium superior to that achieved with either bastnasite or alumina alone (Figure 1).

The presence of bastnasite enables one to add a substantial amount of alumina to the catalyst formulation, to provide increased bottoms cracking, without an increase in coke and light gas yield.

In summary it may be concluded that:

1) A catalyst with bastnasite shows good vanadium tolerance;

2) A catalyst with large pore alumina shows good nickel tolerance and;

3) A catalyst with large pore alumina provides good bottoms cracking.

A catalyst that contains both bastnasite and large pore alumina not only combines these three properties, but also shows better coke and light gas selectivities, than can be expected from the individual components.

The scope of the present invention will be better understood by recourse to the following examples:

EXAMPLES

Catalysts were prepared by mixing a molecular sieve with a combination of matrix materials and spray drying the mixture. The molecular sieves are of the LZ-210 type. In these sieves, the sodium content is reduced to improve hydrothermal stability. This is done via ion exchange of the sieve with an appropriate cation (for example $NH_4^+$ and/or rare earth ions) either prior to mixing into the spray drier feed or after the particle has been formed by spray drying.

The matrix consists of an admixture of a large pore, low surface area alumina and bastnasite along with a binding agent such as a silica sol and preferably with an inert refractory oxide such as kaolin, such that the resulting matrix of the final catalyst particle has an average pore diameter in the range of 100-200 Å. (10-20 nm)

## EXAMPLES I-XVI

The catalysts in these examples were formulated using the procedures outlined above, with a Beta type LZ-210 molecular sieve having a unit cell size of 24.52 Å (2.452 nm), and with varying amounts of bastnasite and large pore alumina. All catalysts evaluated contained 35 wt% molecular sieve and were ion exchanged using identical procedures with equal amounts of ammonium and equal amounts of rare earth salts. A typical analysis of a Beta LZ-210-containing FCC catalyst made with 5% bastnasite and 15% large pore alumina is as follows:

| | |
|---|---|
| Surface area $m^2/g$ | 261 |
| Total pore volume $cm^3/g$ | 0.34 |
| Average matrix pore diameter Å (nm) | 110 (11) |
| Bulk density $g/cm^3$ | 0.67 |
| $Na_2O$ wt% (IGN.BASIS) | 0.21 |
| $Re_2O_3$ wt% (IGN.BASIS) | 4.3 |
| $Al_2O_3$ wt% (IGN.BASIS) | 32.7 |

The catalysts that were tested for metals tolerance were first dried $\frac{1}{2}$ hour at 200°C followed by a calcination at 560°C for 2 hours. The catalyst was then impregnated with vanadium naphthenate dissolved in toluene to the point of incipient wetness, dried at 110°C for 1 hour to remove toluene and then for 1 hour at 225°C to decompose the naphthenate and deposit the vanadium. This procedure was repeated a sufficient number of times to deposit 5000 PPM of vanadium upon the catalyst. The catalyst was then decoked for 3 hours at 560°C in a muffle furnace and then deactivated in a fluidized bed using 100% steam as the fluidizing media for 18 hours at 750°C.

The catalytic properties of the impregnated and steam deactivated samples were determined in a microactivity test (MAT)unit at the following FCC conditions which are representative of typical FCC conditions which are well known to those of skill in the art:

| | |
|---|---|
| Reactor temperature | 500°C |
| Weight Hourly Space Vel. | 16 $h^{-1}$ |
| Cat/Oil, WT/WT | 2,3 and 4 |

The vacuum gas oil used as reactor feed for this MAT test has the following analysis:

| Distallation | °C |
|---|---|
| IBP | 246 |
| 5% | 354 |
| 10% | 376 |
| 20% | 398 |
| 50% | 444 |
| 90% | 514 |
| 95% | 531 |
| EP | 552 |

| Density g/cm³ (15°C) | 0.907 |
|---|---|
| Ramsbottom carbon | 0.23 wt% |
| Sulphur | 0.44 wt% |
| Basic nitrogen | 340 PPMW |
| Refractive index (40°C) | 1.4960 |

The different cat/oil ratios provided a range of conversion which allowed the yield to be determined at a constant 50 wt% conversion. The coke and light gas yields at 50 wt% conversion for the catalysts studied are shown in Table 1 and in Figures 3 and 4.

Light gas yields are defined as the sum of hydrogen, methane, ethane and ethylene hydrocarbon produced expressed as volume of gas per weight or mass of feed charged--specifically normal cubic meters of gas (0°C and 101 kPa) per ton of feed (NM³/ton where ton is a metric ton or 1 Mg).

## TABLE 1

## EXAMPLES I-XVI

## BETA TYPE LZ-210 CATALYSTS WITH 5000 PPM VANADIUM

| | Catalyst composition | | Yields at 50 wt% conversion | | |
| --- | --- | --- | --- | --- | --- |
| Example | % Large pore alumina | % Bastna-site | Light gas (Nm3/ton of feed) | Coke (wt%) | Activity* retention |
| I | 0 | 0 | 70 | 2.80 | 0.33 |
| II | 0 | 5 | 55 | 1.85 | .61 |
| III | 0 | 10 | 35 | 1.40 | .82 |
| IV | 5 | 0 | 72 | 2.45 | .47 |
| V | 5 | 5 | 58 | 1.75 | .66 |
| VI | 5 | 5 | 61 | 2.20 | .83 |
| VII | 5 | 10 | 39 | 1.45 | .70 |
| VIII | 5 | 15 | 39 | 1.35 | .65 |
| IX | 10 | 5 | 57 | 1.80 | .69 |
| X | 15 | 0 | 83 | 2.30 | .65 |
| XI | 15 | 5 | 55 | 1.55 | .82 |
| XII | 15 | 5 | 57 | 1.85 | .69 |
| XIII | 15 | 10 | 46 | 1.40 | .67 |
| XIV | 20 | 0 | 82 | 2.40 | .62 |
| XV | 20 | 5 | 63 | 2.00 | .55 |
| XVI | 20 | 10 | 46 | 1.50 | .90 |

* activity with 5000 ppm V / activity with no V

EXAMPLES XVII-XXVI

Experiments were carried out with a different catalyst sieve formulation, Alpha LZ-210 having a unit cell size of 24.60 Å (2.460 nm). The catalysts were prepared with varying amounts of bastnasite and large pore alumina in the same manner as described for Examples I-XVI.

These catalysts were also impregnated with vanadium in the same manner as was done for Examples I-XVI, and the catalytic properties of the impregnated samples were tested in the same manner as for the previous examples.

The results of evaluations of the various catalysts tested were in excellent agreement with the results obtained for Examples I-XVI and are reflected in the data presented in Table 2 and Figures 1, 3 and 4.

## TABLE 2

## EXAMPLES XVII-XXVI

## ALPHA TYPE LZ-210 CATALYSTS WITH 5000 PPM VANADIUM

| | Catalyst composition | | Yields at 50 wt% conversion | | |
|---|---|---|---|---|---|
| Example | % Large pore alumina | % Bastna-site | Light gas (Nm3/ton of feed) | Coke (wt%) | Activity* retention |
| XVII | 0 | 0 | 83 | 2.70 | 25 |
| XVIII | 0 | 5 | 51 | 2.05 | 50 |
| XIX | 0 | 10 | 38 | 1.35 | 50 |
| XX | 5 | 0 | 73 | 2.60 | 36 |
| XXI | 5 | 5 | 55 | 2.05 | 42 |
| XXII | 5 | 5 | 35 | 1.40 | 73 |
| XXIII | 10 | 5 | 48 | 1.80 | 44 |
| XXIV | 15 | 0 | 100 | 2.90 | 37 |
| XXV | 15 | 5 | 50 | 1.80 | 52 |
| XXVI | 15 | 10 | 40 | 1.55 | 55 |

* activity with 5000 ppm V / activity with no V

EXAMPLES XXVII-XXXIV

Additional experiments were carried out with catalysts formulated with Beta LZ-210 sieve, the same sieve used in the catalysts of Examples I-XVI, and were prepared with varying amounts of bastnasite and

EP 0 350 280 B1

large pore alumina in the same manner as described in Examples I-XVI. In the present examples the catalysts were impregnated with nickel to a level of 2500 PPMW. The method of impregnation was the same as was used in the previous examples with nickel naphthenate substituted for vanadium naphthenate in the impregnation. The catalytic properties of the impregnated samples were tested in the same manner as for the previous samples.

The results of evaluations of the various catalysts tested are reflected in the data presented in Table 3 and Figure 2.

## TABLE 3

## EXAMPLES XXVII-XXXIV

## BETA TYPE LZ-210 CATALYSTS WITH 2500 PPM NICKEL

| | Catalyst composition | | Yields at 50 wt% conversion | |
|---|---|---|---|---|
| Example | % Large pore alumina | % Bastna-site | Light gas (Nm3/ton of feed) | Coke (wt%) |
| XXVII | 0 | 0 | 38 | 1.6 |
| XXVIII | 0 | 10 | 36 | 1.5 |
| XXIX | 5 | 0 | 31 | 1.2 |
| XXX | 5 | 5 | 31 | 1.2 |
| XXXI | 5 | 10 | 31 | 1.2 |
| XXXII | 15 | 0 | 30 | 1.2 |
| XXXIII | 15 | 5 | 26 | 1.2 |
| XXXIV | 15 | 10 | 30 | 1.3 |

DISCUSSION OF RESULTS

From these data, it is evident that a fluid catalytic cracking catalyst, which can contain any one of a variety of LZ-210 molecular sieves, in combination with a large pore alumina and bastnasite as a source of non-exchangeable rare earth materials, , improves the ability of the catalyst to maintain activity in the presence of high vanadium levels, and overcomes the tendency of prior art catalysts to produce excessive amounts of unwanted coke and light gas in the presence of vanadium and/or nickel.

The combination taught by the present invention allows one to incorporate higher amounts of alumina for bottoms cracking purposes without incuring the problems of prior art catalysts related to the production of excessive amounts of unwanted coke and light gas.

The molecular sieve content of the catalysts of the present invention is 10-50 wt% of the total formulation, preferably in the range of 20-40 wt%. The alumina content is 0.5-25 wt% of the total formulation, preferably 5-15 wt%. , The bastnasite content is 0.5-25 wt% and more preferably 5-15 wt%. The binder can vary between 10-25 wt%, preferably 15-20 wt% and the inert refractory oxide between 20-60 wt%, preferably between 25-40 wt%.

It is contemplated that the three major components of the catalyst composition of the present invention, those being the LZ-210 molecular sieve, the large pore alumina matrix component, and the bastnasite rare

8

earth component, may be prepared either by mixing them together with one or more other matrix components prior to introducing them into an FCC catalyst, or alternatively, these components may be prepared by mixing each one separately with one or more other matrix components, or alternatively they may be prepared by mixing any combination of any two of these components. The combined components may be introduced into an FCC process as a premixed catalyst or alternatively as separate components and mixed in-situ in the FCC process.

While the benefits of the present invention have only been exemplified in catalysts utilizing bastnasite up to 15 wt%, it is contemplated that higher levels of bastnasite up to 25 wt.% may be employed under specific conditions to equal or greater advantage,

**Claims**

1.  A vanadium and nickel resistant fluid catalytic cracking catalyst comprising a combination of 10 to 50 weight % of an LZ-210 type molecular sieve component, 0.5 to 25 weight % of a rare earth component of the bastnasite type separate from the molecular sieve component and 0.5 to 25 weight % of a large pore, low surface area alumina in a matrix, the amount of alumina in the matrix being such as to result in the matrix having a pore diameter greater than 90 Angstroms (9nm) and a surface area of 25 to 60 $m^2$/g.

2.  A catalyst composition according to Claim 1 wherein the molecular sieve component is Alpha LZ-210 having a unit cell size of 24.58 to 24.62 Å (2.458 to 2.462 nm), or Beta LZ-210 having a unit cell size of 24.48 to 24.54 Å (2.448 to 2.454 nm).

3.  A catalyst composition according to Claim 1 or 2 wherein the molecular sieve component is present in an amount from 20 to 40 weight %, based upon the weight of the total catalyst formulation.

4.  A catalyst composition according to any one of Claims 1 to 3 wherein the rare earth component is present in an amount from 5 to 15 weight %, based upon the weight of the total catalyst formulation.

5.  A catalyst composition according to any one of Claims 1 to 4 wherein the large pore, low surface area alumina component is present in an amount from 5 to 20 weight %, based upon the weight of the total catalyst formulation.

6.  A metal tolerant fluid catalytic cracking process comprising contacting a charge stock containing deleterious amounts of nickel and/or vanadium with the cracking catalyst defined in any one of Claims 1 to 5 at catalytic cracking conditions.

**Patentansprüche**

1.  Gegen Vanadin und Nickel beständiger Katalysator für katalytisches Fließmittelkracken mit einer Kombination von 10 bis 50 Gew.-% einer Molekularsiebkomponente vom Typ LZ-210, 0,5 bis 25 Gew.-% einer Seltenen Erde-Komponente vom Bastnasittyp, getrennt von der Molekularsiebkomponente, und 0,5 bis 25 Gew.-% eines großporigen Aluminiumoxids mit geringer Oberfläche in einer Matrix, wobei die Menge an Aluminiumoxid in der Matrix derart ist, daß sie zu der Matrix mit einem Porendurchmesser größer als 90 Å (9 nm) und einer Oberfläche von 25 bis 60 $m^2$/g führt.

2.  Katalysatorzusammensetzung nach Anspruch 1, worin die Molekularsiebkomponente alpha LZ-210 mit einer Einheitszellengröße von 24,58 bis 24,62 Å (2,458 bis 2,462 nm) oder beta LZ-210 mit einer Einheitszellengröße von 24,48 bis 24,54 Å (2,448 bis 2,454 nm) ist.

3.  Katalysatorzusammensetzung nach Anspruch 1 oder 2, bei der die Molekularsiebkomponente in einer Menge von 20 bis 40 Gew.-%, bezogen auf das Gewicht der gesamten Katalysatorzusammensetzung, beträgt.

4.  Katalysatorzusammensetzung nach einem der Ansprüche 1 bis 3, bei der die Seltene Erde-Komponente in einer Menge von 5 bis 15 Gew.-%, bezogen auf das Gewicht der gesamten Katalysatorzusammensetzung, beträgt.

**5.** Katalysatorzusammensetzung nach einem der Ansprüche 1 bis 4, bei der die großporige Aluminiumoxidkomponente mit kleiner Oberfläche in einer Menge von 5 bis 20 Gew.-%, bezogen auf das Gewicht der gesamten Katalysatorzusammensetzung, vorliegt.

**6.** Gegen Metall tolerantes Verfahren zum katalytischen Fließmittelkracken unter Behandlung einer schädliche Mengen an Nickel und/oder Vanadin enthaltenden Beschickung mit einem Krackkatalysator nach einem der Ansprüche 1 bis 5 bei katalytischen Krackbedingungen.

**Revendications**

**1.** Catalyseur de craquage catalytique fluide résistant au vanadium et au nickel, comprenant une composition de 10 à 50 % en poids d'un composant à base de tamis moléculaire de type LZ-210, de 0,5 à 25 % en poids d'un composant dérivé d'élément de terre rare du type bastnasite, séparé du composant à base de tamis moléculaire, et de 0,5 à 25 % en poids d'une alumine à faible surface spécifique et à gros pores, dans une matrice, la quantité d'alumine dans la matrice étant telle que la matrice a un diamètre de pore supérieur à 90 Å (9 nm) et une surface spécifique de 25 à 60 m$^2$/g.

**2.** Composition catalytique selon la revendication 1, dans laquelle le composant à base de tamis moléculaire est le tamis Alpha LZ-210 ayant une taille d'alvéole unitaire de 24,58 à 24,62 Å (2,458 à 2,462 nm), ou le tamis Béta LZ-210 ayant une taille d'alvéole unitaire de 24,48 à 24,54 Å (de 2,448 à 2,454 nm).

**3.** Composition catalytique selon la revendication 1 ou 2, dans laquelle le composant à base de tamis moléculaire est présent selon une quantité de 20 à 40 % en poids, par rapport au poids de la composition catalytique totale.

**4.** Composition catalytique selon l'une quelconque des revendications 1 à 3, dans laquelle le composant d'élément de terre rare est présent selon une quantité de 5 à 15 % en poids par rapport au poids de la composition catalytique totale.

**5.** Composition catalytique selon l'une quelconque des revendications 1 à 4, dans laquelle l'alumine à faible surface spécifique et à gros pores, est présente selon une quantité de 5 à 20 % en poids par rapport au poids de la composition catalytique totale.

**6.** Procédé de craquage catalytique fluide tolérant un métal, selon lequel on met en contact une charge de départ contenant des quantités nuisibles de nickel et/ou de vanadium, avec le catalyseur de craquage défini selon l'une quelconque des revendications 1 à 5, dans des conditions de craquage catalytique.

# F I G. Ia

## ACTIVITY RETENTION WITH 5000 PPM V

10 WT % BASTNASITE
5 WT % BASTNASITE
0 WT % BASTNASITE

*ALPHA LZ - 210*

% ACTIVITY RETENTION

WT % LARGE PORE ALUMINA IN THE CATALYST

WT % LARGE PORE ALUMINA IN THE MATRIX

# F I G. Ib

## ACTIVITY RETENTION WITH 5000 PPM V

10 WT % BASTNASITE
5 WT % BASTNASITE
0 WT % BASTNASITE

$$* \text{ \% ACTIVITY RETENTION} = \frac{\text{ACTIVITY WITH 5000 PPM V}}{\text{ACTIVITY WITH NO VANADIUM}} \times 100\%$$

*BETA LZ - 210*

% ACTIVITY RETENTION*

WT % LARGE PORE ALUMINA IN THE CATALYST

WT % LARGE PORE ALUMINA IN THE MATRIX

# F I G. 2a

## BETA TYPE LZ-210 WITH 2500 PPM NICKEL

# F I G. 2b

## BETA TYPE LZ-210 WITH 2500 PPM NICKEL

# F I G. 3a

## COKE SELECTIVITY WITH 5000 PPM VANADIUM

WT % BASTNASITE
○ - 0
△ - 5
□ - 10

MAT COKE YIELD - WT %
AT 50 WT % CONVERSION

ALPHA TYPE LZ - 210

% LARGE PORE ALUMINA IN THE CATALYST

% LARGE PORE ALUMINA IN THE MATRIX

# F I G. 3b

## COKE SELECTIVITY WITH 5000 PPM VANADIUM

WT % BASTNASITE
○ - 0
△ - 5
□ - 10

MAT COKE YIELD - WT %
AT 50 WT % CONVERSION

BETA TYPE LZ - 210

% LARGE PORE ALUMINA IN THE CATALYST

% LARGE PORE ALUMINA IN THE MATRIX

# F I G. 4a

## LIGHT GAS SELECTIVITY WITH 5000 PPM VANADIUM

WT % BASTNASITE
- O - 0
- △ - 5
- □ - 10

ALPHA TYPE - LZ - 210

MAT LIGHT GAS YIELD (WT %) AT 50 WT % CONVERSION

% LARGE PORE ALUMINA IN THE CATALYST

% LARGE PORE ALUMINA IN THE MATRIX

# F I G. 4b

## LIGHT GAS SELECTIVITY WITH 5000 PPM VANADIUM

WT % BASTNASITE
- O - 0
- △ - 5
- □ - 10

BETA TYPE LZ - 210

MAT LIGHT GAS YIELD (WT %) AT 50 WT % CONVERSION

% LARGE PORE ALUMINA IN THE CATALYST

% LARGE PORE ALUMINA IN THE MATRIX